# EUROPÄISCHE PATENTSCHRIFT

(11) **EP 1 378 705 B1**
(45) Veröffentlichungstag und Bekanntmachung des Hinweises auf die Patenterteilung: **31.08.2005**
(21) Anmeldenummer: 03014315.0
(22) Anmeldetag: 25.06.2003
(51) Int. Cl.: F16L 59/02, F16L 59/16

(54) **Klammervorrichtung**
Clamp assembly
Assemblage de crochets

(30) Priorität: 05.07.2002 DE 20210454 U
(43) Veröffentlichungstag der Anmeldung: 07.01.2004
(73) Patentinhaber: Gebr. Kemper GmbH + Co. KG Metallwerke, 57462 Olpe (DE)
(72) Erfinder: Fries, Stefan, 57462 Olpe (DE)
(74) Vertreter: Grünecker, Kinkeldey, Stockmair & Schwanhäusser Anwaltssozietät

(56) Entgegenhaltungen:
- DE-B- 1 164 773
- DE-C- 810 901
- GB-A- 704 610
- US-A- 4 830 060

## Beschreibung

Die vorliegende Erfindung liegt auf dem Gebiet der Wärmedämmung von Rohrleitungen und Armaturen. Letztere werden üblicherweise mit Dämmschalen gedämmt, die als vorgeformte Dämmkörper ausgebildet und üblicherweise zweischalig mit einem beide Schalen verbindenden Scharnier ausgebildet sind. Die Dämmschalen bestehen aus einem Dämmstoff, in der Regel aus einem geschäumten vernetzten Kunststoff, und schließen sich im montierten Zustand, in dem beide Schalen aneinander liegen, an die als Meterware auf die geraden Rohrleitungsstücke umwickelte Rohrdämmung an.

Dämmschalen werden beispielsweise an Abzweigungen für Rohre montiert oder aber an solchen Stellen, an denen eine Armatur in der Rohrleitung vorgesehen ist. Dementsprechend weisen die Dämmschalen häufig wenigstens drei Öffnungen auf, wobei regelmäßig zwei Öffnungen einander gegenüberliegend und mit einem mittleren Durchgang für die Leitung miteinander verbunden sind, wohingegen die andere Öffnung schräg oder rechtwinkelig zu den ersten beiden genannten Öffnungen ausgerichtet ist und einen Durchgang für eine abzweigende Leitung oder aber eine Betätigungseinrichtung der Armatur aufweist.

Die vorerwähnten Dämmschalen sind in der Heizungs- und Sanitärtechnik sowie der Klimatechnik allgemein bekannt und werden z.B. durch wenigstens zwei C-förmig gebogene Drahtklammern in einem geschlossenen Zustand gehalten, wie es beispielsweise in Fig. 4 der DE 1 164 773 B gezeigt ist. Diese vorbekannten Drahtklammern weisen zum einen den Nachteil auf, dass sie einen vollständigen Verschluss der Dämmschale unter Einschluss der zu isolierenden Armatur nicht sicher gewährleisten können. So kann es sein, dass die die Dämmschale spreizenden Kräfte größer als die von der C-förmig gebogenen Drahtklammer aufgebrachten Klammerkräfte sind. Hinreichende Klammerkräfte können die umbogenen Drahtklammern ohnehin nur dann erzeugen, wenn diese die geschlossene Dämmschale über ihren nahezu gesamten Umfang umgreifen. Entsprechend schwierig ist es, den vorbekannten Drahtklammern auch solche Bereiche der Dämmschale sicher zu verschließen, die sich nicht vollumfänglich umgreifen lassen, was regelmäßig für denjenigen Abschnitt gilt, der die schräg oder senkrecht abgehende Leitung bzw. die schräg oder senkrecht stehenden Betätigungsreinrichtungen der Armatur isolieren soll. Darüber hinaus besteht das Problem, dass die Dämmschale zusammen mit den Drahtklammern geliefert wird, die Teile jedoch auf der Baustelle vor der Installation der Dämmschale verloren gehen.

Der vorliegenden Erfindung liegt die Aufgabe zugrunde, die obigen Probleme zu lösen. Insbesondere liegt der vorliegenden Erfindung das Problem zugrunde, ein die Dämmschale zuverlässig schließendes Mittel anzugeben, welches derart der Dämmschale zugeordnet ist, dass die Gefahr einer Trennung des Mittels und der Dämmschale-auf der Baustelle vermindert ist.

Zur Lösung des obigen Problems wird der vorliegenden Erfindung eine Klammervorrichtung für eine Dämmschale mit wenigstens zwei bogenförmigen Klammerelementen angegeben, die in die Dämmschale einbringbare Vorsprünge aufweisen und über zwischen den Klammerelementen angeordnete Stege lösbar miteinander zu einem einheitlichen Bauteil verbunden sind und zusammen mit wenigstens einem Befestigungsmittel des Bauteils zur Befestigung des einheitlichen Bauteils an der Dämmschale mittels Spritzgießen hergestellt sind.

Die erfindungsgemäße Klammervorrichtung weist wenigstens zwei bogenförmige Klammerelemente auf, welche in die Dämmschale einbringbare Vorsprünge aufweisen. Die Klammerelemente sind aus einem hinreichend elastischen Kunststoff mittels Spritzgießen gebildet, wobei die Vorsprünge nach Art von Widerhaken, vorzugsweise im Endbereich der Klammerelemente ausgebildet sind, um diese in die Dämmschale beiderseits der Trennlinie der Dämmschalenhälften einzubringen. Aufgrund der elastischen Eigenschaften der Dämmschale kann diese hierbei so verformt werden, dass die beiden Dämmschalenhälften an ihrer Trennlinie nach Rückstellung elastischer Verformungsanteile eng aneinander liegen und so den umschlossenen Rohrabschnitt bzw. die umschlossen Armatur zuverlässig dämmen.

Die erfindungsgemäße Vorrichtung weist wenigstens zwei bogenförmige Klammerelemente auf, so dass jedenfalls die beiden, die Rohrleitung umgebenden einander gegenüberliegenden Endabschnitte der Dämmschale geklammert werden können. Bei der erfindungsgemäßen Vorrichtung sind darüber hinaus die Klammerelemente über wenigstens einen zwischen den Elementen angeordneten Steg lösbar miteinander zu einem einheitlichen Bauteil verbunden. Diesem einheitlichen Bauteil ist wenigstens ein Befestigungsmittel zugeordnet, mit dem das einheitliche Bauteil an der Dämmschale befestigt werden kann. Dementsprechend lässt sich die erfindungsgemäße Klammervorrichtung mittels des Befestigungsmittels direkt an der Dämmschale lösbar befestigen, wodurch dem Problem begegnet wird, dass die Klammervorrichtung nach Auslieferung der Dämmschale von dieser getrennt wird und verloren geht.

Bevorzugte Weiterbildung der erfindungsgemäßen Klammervorrichtung sind in den abhängigen Ansprüchen angegeben.

Die vorliegende Erfindung wird nachfolgend anhand von zwei Ausführungsbeispielen der erfindungsgemäßen Klammervorrichtung in Verbindung mit der Zeichnung näher erläutert. In dieser zeigen:
- Figur 1: eine perspektivische Ansicht auf ein erstes Ausführungsbeispiel einer erfindungsgemäßen Klammervorrichtung
- Figur 2: eine Draufsicht auf ein zweites Ausführungsbeispiel einer erfindungsgemäßen Klammervorrichtung;
- Figur 3: eine perspektivische Ansicht einer Dämmschale nach Befestigung der Klammerelemente des ersten oder zweiten Ausführungsbeispiels; und
- Figur 4: eine Draufsicht auf das in Figur 1 gezeigte, in einer Dämmschale aufgenommene Ausführungsbeispiel einer Klammervorrichtung.

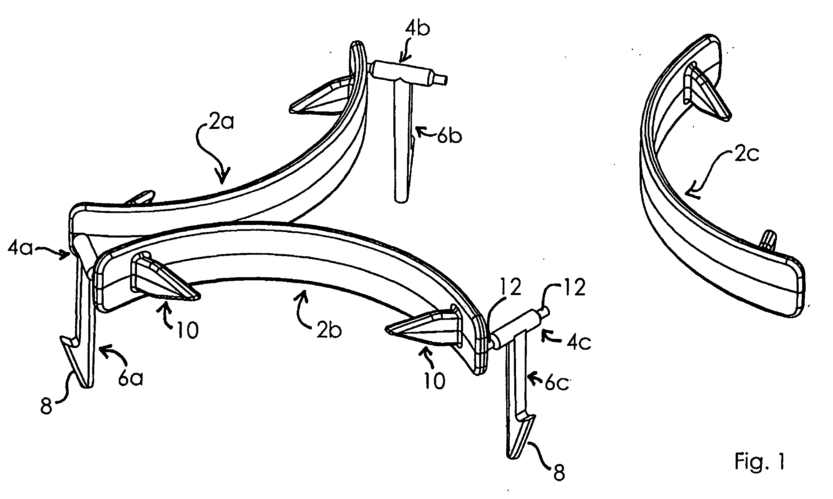

In Figur 1 ist ein erstes Ausführungsbeispiel einer Klammervorrichtung gemäß der vorliegenden Erfindung mit drei Klammerelementen 2 gezeigt, wobei die Klammerelemente 2a, 2b über einen Steg 4a miteinander verbunden sind. Das separat gezeichnete Klammerelement 2c war ursprünglich an den weiteren Stegen 4b, 4c befestigt. Die Stege 4 sind einstückig mit einem als Raststift 6 ausgebildeten Befestigungsmittel verbunden. Die Raststifte 6 weisen jeweils endseitig einen Widerhaken 8 auf, der mit Abstand zu der Stirnseite der zugeordneten Klammerelemente 2 angeordnet ist. Die Raststifte 6 überragen dementsprechend die stiftseitige untere Stirnseite der Klammerelemente 2.

Die Klammerelemente 2 weisen im Bereich ihrer Enden an ihrer konkaven Innenfläche jeweils einen Vorsprung 10 auf, der in das Material einer hier nicht dargestellten Dämmschale einbringbar ist und im vorliegenden Fall nach Art einer Lanze vorne spitz zulaufend ausgebildet ist.

Die in Figur 1 gezeigten Teile 2, 4, 6 werden mittels Spritzgießen zu einem einheitlichen Bauteil ausgeformt. Bei dem in Figur 1 gezeigten Ausführungsbeispiel befinden sich zwischen den Stegen 4 und den jeweiligen Klammerelementen 2 Angüsse 12, die einem gegenüber dem Durchmesser des Steges 4 verringerten Querschnitt haben. Diese Angüsse 12 bilden Sollbruchstellen zwischen den Klammerelementen 2 und den Stegen 4 aus. Diese Sollbruchstelle kann beispielsweise durch mehrfaches Verschwenken der Stege 4 gegenüber den Klammerelementen 2 zum Versagen gebracht werden.

Bei dem in Figur 1 gezeigten Ausführungsbeispiel befindet sich die Teilungsebene des Spritzgießwerkzeuges auf halber Höhe der Klammerelemente 2, d.h. die Mittellängsachse der Stege 4 liegt in der Teilungsebene des Werkzeuges. Die Formnester zur Ausbildung der Raststifte 6 befinden sich in einer Werkzeughälfte, wobei es zur Ausbildung der Widerhaken 8 bei dem in Figur 1 gezeigten Ausführungsbeispiel ein komplizierter Werkzeugaufbau erforderlich ist. Zur Vereinfachung des Werkzeuges können die Raststifte 6 im wesentlichen zunächst in der Teilungsebene angespritzt werden und nachfolgend vor der Befestigung der gezeigten Klammervorrichtung an der Dämmschale um etwa 90° verschwenkt werden.

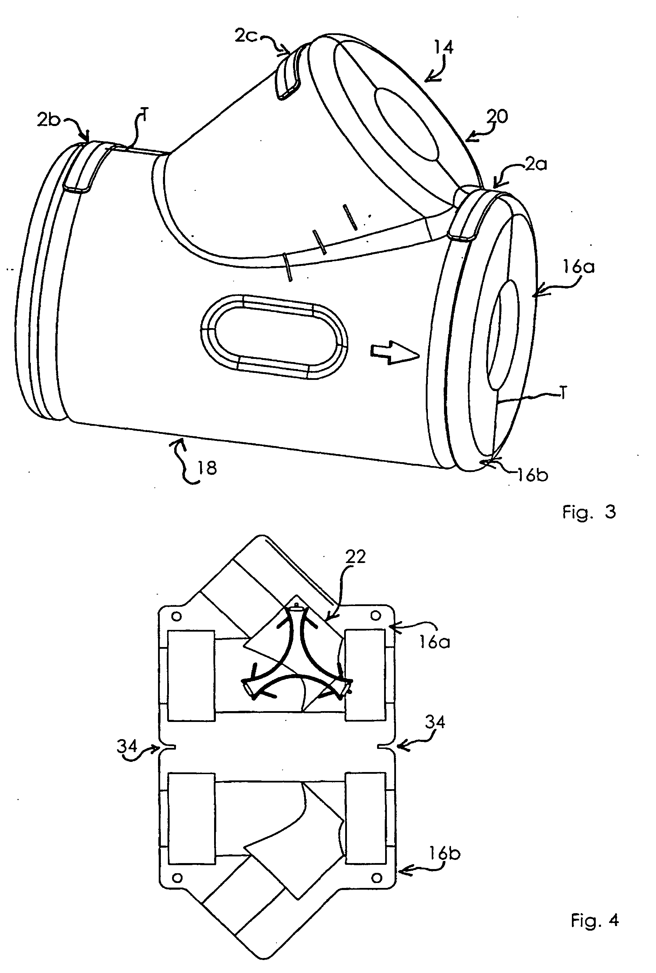

In Figur 3 ist eine Dämmschale 14 bestehend aus zwei Dämmschalenhälfte 16a, 16b, die jeweils die Hälfte eines die Leitung umgebenden Hauptabschnittes 18 zur Ummantelung der Rohrleitung sowie einen von dem Hauptabschnitt 18 schräg oder senkrecht abgehenden Stutzen 20 ausbilden, welcher eine Betätigungseinrichtung der Armatur bzw. ein Ventiloberteil umgibt. Die Dämmschalenhälften 16a, 16b sind an der dem Stutzen 20 abgewandten Mantelfläche über ein hier nicht dargestelltes Scharnier verbunden. Die Teilungslinie T der beiden Dämmschalenhälften 16a, 16b ist in Figur 3 deutlich zu erkennen.

Im Bereich des Hauptabschnittes 18 sind die beiden Dämmschalenhälften 16a, 16b mit zwei die Teilungslinie T überbrückenden Klammerelementen 2a, 2b verbunden. Am Endbereich des Stutzens 20 befindet sich ein drittes, gleichfalls die Teilungslinie T überbrückendes Klammerelement 2c.

Bei der in Figur 3 gezeigten Darstellung sind die jeweiligen Klammerelemente 2 mit ihren Vorsprüngen 10 in das Schaumstoffmaterial der beiden Dämmschalenhälften 16a, 16b eingebracht. Da die Vorsprünge 10 eines einzigen Klammerelementes 2 aufeinander zugerichtet sind, verhindern die Klammerelemente ein unerwünschtes Öffnen der geschlossenen Dämmschale, und zwar sowohl im Bereich des Hauptabschnittes 18 als auch im Bereich des Stutzens 20. Dementsprechend ist die in Figur 3 gezeigte Dämmschale dauerhaft und zuverlässig zur Isolation eines Installationsteils bzw. einer Armatur. verschlossen.

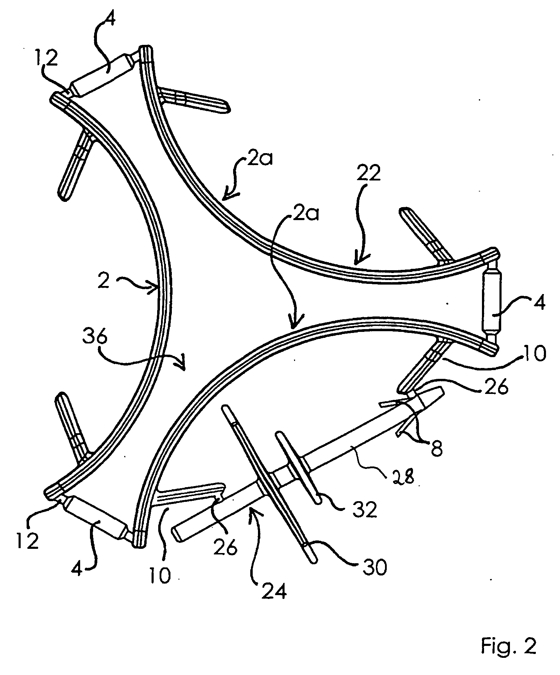

Die Figur 2 zeigt eine Draufsicht auf ein alternatives Ausführungsbeispiel zu dem in Figur 1 gezeigten Ausführungsbeispiel. Gleiche Teile sind gegenüber der Darstellung in Figur 1 mit den gleichen Bezugsziffern gekennzeichnet. Das in Figur 2 gezeigte Ausführungsbeispiel weist, wie das in Figur 1 gezeigte Ausführungsbeispiel, drei bogenförmige Klammerelemente 2 auf, die jeweils über Stege 4 endseitig miteinander verbunden sind, und zwar über entsprechend im Durchmesser verminderte Angüsse 12. Die Stege 4 sind jedoch gegenüber dem Ausführungsbeispiel gemäß Figur 1 zylinderförmig ausgebildet, d.h. weisen nicht die Raststifte auf. An dem aus den Klammerelementen 2 und den Stegen 4 gebildeten einheitlichen Bauteil 22 ist vielmehr das Befestigungsmittel in Form eines separaten, lösbaren Befestigungsteils 24 vorgesehen, welches an dem einheitlichen Bauteil 22 angespritzt ist. Das Befestigungsteil 24 befindet sich im wesentlichen zwischen den Vorsprüngen 10 eines Klammerelementes 2a und ist mit diesen Vorsprüngen 10 über Angüsse 26 lösbar verbunden.

Das Befestigungsteil 24 weist einen länglichen Stift 28 auf, der einen Halteteller 30 trägt und an seinem befestigungsseitigen Ende zwei in der Teilungsebene liegende Widerhaken 8 aufweist. Zwischen den Widerhaken 8 und dem Halteteller 30 ist eine Distanzscheibe 32 vorgesehen. Bei dem gezeigten Ausführungsbeispiel ist die Distanzscheibe 32 kreisrund, wohingegen der Halteteller 30 sich parallel zu den Stirnseiten der Klammerelemente 2 erstreckende ebene Längsseiten aufweist, die über Kreissegmentabschnitte miteinander verbunden sind.

Das in Figur 2 gezeigte Ausführungsbeispiel wird als Einheit mittels Spritzgießen zunächst hergestellt. Danach wird das Befestigungsteil 24 an den Angüssen 26 von dem einheitlichen Bauteil 22 getrennt, beispielsweise durch Knicken.

Danach wird das einheitliche Bauteil 22 in die in Figur 4 gezeigte Lage innerhalb der Dämmschale 14 gebracht. Figur 4 zeigt eine Draufsicht auf die auseinandergeklappten Dämmschalenhälften16a, 16b der in Figur 3 gezeigten Dämmschale 14, wobei sich das vorher genannte, beide Dämmschalenhälften 16a, 16b miteinander verbindende Filmscharnier zwischen zwei Einbuchtungen 34 erstreckt.

Wie aus Figur 4 ersichtlich, befindet sich das einheitliche Bauteil 26 in Aussparungen der Dämmschalenhälfte 16a für die aufzunehmende Kontur des Installationsteils bzw. der Armatur. Das einheitliche Bauteil 22 ist derart dimensioniert, dass es in die geschlossene Dämmschale passt. Bei dem in Figur 1 gezeigten Ausführungsbeispiel wird das einheitliche Bauteil 22 durch die Raststifte 6 in der Dämmschalenhälfte 16a gehalten, welche in das Dämmschalenmaterial eindringen und über die Widerhaken 8 hierin verrastet sind.

Bei dem in Figur 2 gezeigten Ausführungsbeispiel wird das einheitliche Bauteil 22 in die Dämmschalenhälfte 16a nach Abtrennen des Befestigungsteils 24 eingelegt. Danach wird das Befestigungsteil 24 in einen zwischen den Klammerelementen 2 ausgesparten Freiraum 36 eingebracht, und zwar in demjenigen Zwickel, der etwa von der Mitte der gebogenen Klammerelemente 2 umgeben wird. Der Durchmesser der Distanzscheibe 32 ist kleiner als der zwickelförmige Freiraum 36, so dass das einheitliche Bauteil 22 über die Distanzscheibe 32 relativ zu dem Befestigungsteil 24 innerhalb gewisser Toleranzen festgelegt wird. Innerhalb dieser Toleranzen überdeckt jedoch der Halteteller 30 jeweils die Stirnseiten der drei Klammerelemente 2, so dass das einheitliche Bauteil 22 über das Befestigungsteil 24 in der Dämmschalenhälfte 16a gehalten ist, nachdem das Befestigungsteil 24 mit seinen befestigungsseitigen Enden, d.h. mit den Widerhaken 8 in das Material der Dämmschalenhälfte 16a eingebracht ist.

### Bezugszeichenliste

- 2: Klammerelement
- 4: Steg
- 6: Raststift
- 8: Widerhaken
- 10: Vorsprung
- 12: Anguss
- 14: Dämmschale
- 16a,b: Dämmschalenhälfte
- 18: Hauptabschnitt
- 20: Stutzen
- 22: einheitliches Bauteil
- 24: Befestigungsteil
- 26: Anguss
- 28: Stift
- 30: Halteteller
- 32: Distanzscheibe
- 34: Einbuchtung
- 36: Freiraum

- T: Teilungslinie

## Patentansprüche

1. Klammervorrichtung für eine Dämmschale (14) mit wenigstens zwei bogenförmigen Klammerelementen (2), die in die Dämmschale (14) einbringabare Vorsprünge (10) aufweisen, **dadurch gekennzeichnet, dass die** Klammerelemente (2) über wenigstens einen zwischen den Klammerelementen (2) angeordneten Steg (4) lösbar miteinander zu einem einheitlichen Bauteil verbunden sind und zusammen mit wenigstens einem Befestigungsmittel (6, 24) zur Befestigung des einheitlichen Bauteils (22) an der Dämmschale (14) mittels Spritzgießen hergestellt sind.

2. Klammervorrichtung nach Anspruch 1, **dadurch gekennzeichnet, dass** drei Klammerelemente (2) vorgesehen sind, die mit ihren konvexen Außenflächen einander gegenüberliegend angeordnet und im Bereich ihrer Enden miteinander verbunden sind.

3. Klammervorrichtung nach Anspruch 1 oder 2, **dadurch gekennzeichnet, dass** das wenigstens eine Befestigungsmittel (6, 24) wenigstens einen Widerhaken (8) zur Befestigung in der Dämmschale (14) aufweist.

4. Klammervorrichtung nach einem der vorherigen Ansprüche, **dadurch gekennzeichnet, dass** das wenigstens eine Befestigungsmittel (6) an wenigstens einem der Stege (4) angeformt und dass der Steg (4) zusammen mit dem Befestigungsmittel (6) lösbar mit den Klammerelementen (2) verbunden ist.

5. Klammervorrichtung nach einem der Ansprüche 1 bis 3, **dadurch gekennzeichnet, dass** das Befestigungsmittel als lösbares an dem einheitlichen Bauteil (22) angespritzt, ausgebildet ist.

6. Klammervorrichtung nach Anspruch 5, **dadurch gekennzeichnet, dass** das Befestigungsteil durch einen mit wenigstens einem Widerhaken (8) versehenen Stift (28) gebildet ist, der in einen zwischen den Klammerelementen (2) gebildeten Freiraum (36) einbringbar ist und der einen Halteteller (30) trägt.

7. Klammervorrichtung nach Anspruch 6, **dadurch gekennzeichnet, dass** zwischen dem Halteteller (30) und dem Widerhaken (8) eine Distanzscheibe (32) vorgesehen ist, die den in die Dämmschale (14) eingeschobenen und in dem Freiraum (36) angeordneten Stift (28) relativ zu dem einheitlichen Bauteil (22) derart positioniert, dass der Halteteller (30) die Stirnseiten sämtlicher Klammerelemente (2) überragt.

8. Klammervorrichtung nach einem der vorherigen Ansprüche, **dadurch gekennzeichnet, dass** der Steg (4) und/oder das Befestigungsmittel (24) über verminderte Angussquerschnitte lösbar mit den Klammerelementen (2) verbunden sind.

9. Klammervorrichtung nach einem der vorherigen Ansprüche, **dadurch gekennzeichnet, dass** das einheitliche Bauteil (22) derart bemessen ist, dass es in die geschlossene Dämmschale (14) passt.

10. Dämmschale (14) mit wenigstens zwei Dämmschalenhälfte (16a, 16b) zur Ummantelung eines Rohrstücks, **gekennzeichnet durch** wenigstens eine lösbar mit der Dämmschale verbundene Klammervorrichtung nach einem der Ansprüche 1 bis 9.

## Claims

1. Clamping device for an insulating shell (14) with at least two arcuately shaped clamping elements (2) incorporating projections (10) which can be inserted in the insulating shell (14), **characterised in that** the clamping elements (2) are detachably connected to one another by means of at least one web (4) disposed between the clamping elements (2) to form an integral component and are made together with at least one fixing means (6, 24) for securing the integral component (22) to the insulating shell (14) by an injection moulding process.

2. Clamping device as claimed in claim 1, **characterised in that** three clamping elements (2) are provided, which are disposed with their convex external surfaces lying opposite one another and are joined to one another in the region of their ends.

3. Clamping device as claimed in claim 1 or 2, **characterised in that** the at least one fixing means (6, 24) has at least one barb (8) which is secured in the insulating shell (14).

4. Clamping device as claimed in one of the preceding claims, **characterised in that** the at least one fixing means (6) is formed on at least one of the webs (4) and the web (4) incorporating the fixing means (6) is detachably joined to the clamping elements (2).

5. Clamping device as claimed in one of claims 1 to 3, **characterised in that** the fixing means is injection-moulded onto the integral component (22) and is detachable.

6. Clamping device as claimed in claim 5, **characterised in that** the fixing part is provided in the form of a pin (28) provided with at least one barb (8) which can be introduced into a space (36) formed between the clamping elements (2) and supports a retaining plate (30).

7. Clamping device as claimed in claim 6, **characterised in that** a spacing disc (32) is provided between the retaining plate (30) and the barb (8) which positions the pin (28), which is pushed into the insulating shell (14) and disposed in the space (36), relative to the integral component (22) so that the retaining plate (30) projects out beyond the front faces of all the clamping elements (2).

8. Clamping device as claimed in one of the preceding claims, **characterised in that** the web (4) and/or the fixing means (24) are detachably connected to the clamping elements (2) by means of sprues with reduced cross sections.

9. Clamping device as claimed in one of the preceding claims, **characterised in that** the integral component (22) is dimensioned so that it fits in the closed insulating shell (14).

10. Insulating shell (14) comprising at least two insulating shell halves (16a, 16b) for lagging a piece of pipe, **characterised by** at least one clamping device as claimed in one of claims 1 to 9 detachably connected to the insulating shell.

## Revendications

1. Assemblage de crochets pour une coque isolante (14) avec au moins deux éléments de crochets (2) courbes qui présentent des saillies (10) pouvant entrer dans la coque isolante (14), **caractérisé en ce que** les éléments de crochets (2) sont reliés entre eux de manière séparable pour former une pièce unitaire par l'intermédiaire d'au moins une barrette (4) disposée entre les éléments de crochets (2) et sont fabriqués au moyen de moulage par injection conjointement avec au moins un moyen de fixation (6, 24) destiné à fixer la pièce unitaire (22) sur la coque isolante (14).

2. Assemblage de crochets selon la revendication 1, **caractérisé en ce qu'**il est prévu trois éléments de crochets (2) dont les faces extérieures convexes sont opposées et qui sont reliés entre eux dans la zone de leurs extrémités.

3. Assemblage de crochets selon la revendication 1 ou 2, **caractérisé en ce que** le ou les moyens de fixation (6, 24) présentent au moins un ardillon (8) pour la fixation dans la coque isolante (14).

4. Assemblage de crochets selon l'une des revendications précédentes, **caractérisé en ce que** le ou les moyens de fixation (6) sont formés sur l'une au moins des barrettes (4) et **en ce que** la barrette (4) est reliée, conjointement avec le moyen de fixation (6), de manière séparable aux éléments de crochets (2).

5. Assemblage de crochets selon l'une des revendications 1 à 3, **caractérisé en ce que** le moyen de fixation est formé comme une pièce séparable moulée par injection sur la pièce unitaire (22).

6. Assemblage de crochets selon la revendication 5, **caractérisé en ce que** la pièce de fixation est formée par une broche (28) qui est munie d'au moins un ardillon (8), qui peut être logée dans un espace libre (36) formé entre les éléments de crochets (2) et qui porte un disque de retenue (30).

7. Assemblage de crochets selon la revendication 6, **caractérisé en ce que**, entre le disque de retenue (30) et l'ardillon (8), il est prévu une rondelle d'écartement (32) qui positionne, relativement à la pièce unitaire (22), la broche (28) insérée dans la coque isolante (14) et disposée dans l'espace libre (36) de telle manière que le disque de retenue (30) dépasse les faces frontales de tous les éléments de crochets (2).

8. Assemblage de crochets selon l'une des revendications précédentes, **caractérisé en ce que** la barrette (4) et/ou le moyen de fixation (24) sont reliés de manière séparable aux éléments de crochets (2) par l'intermédiaire de sections transversales réduites formant culots.

9. Assemblage de crochets selon l'une des revendications précédentes, **caractérisé en ce que** la pièce unitaire (22) est dimensionnée de manière à pouvoir entrer dans la coque isolante fermée (14).

10. Coque isolante (14) avec au moins deux demi-coques isolantes (16a, 16b) destinée à envelopper un tronçon de tuyau, **caractérisée par** au moins un assemblage de crochets relié de manière séparable à la coque isolante selon l'une des revendications 1 à 9.
